# EUROPÄISCHE PATENTANMELDUNG

(11) **EP 3 611 215 A1**
(43) Veröffentlichungstag der Anmeldung: **19.02.2020**
(21) Anmeldenummer: 18189073.2
(22) Anmeldetag: 15.08.2018
(51) Int. Cl.: C08G 77/14

(54) **VERFAHREN ZUR HERSTELLUNG ACETOXYGRUPPEN-TRAGENDER SILOXANE**

(71) Anmelder: Evonik Operations GmbH, 45128 Essen (DE)
(72) Erfinder: KNOTT, Wilfried, 45355 Essen (DE); DUDZIK, Horst, 45326 Essen (DE); HENNING, Frauke, 45259 Essen (DE); CASSENS, Jan, 45665 Recklinghausen (DE)
(74) Vertreter: Evonik Patent Association

(57) **Zusammenfassung**

Ein Verfahren zur Herstellung trifluormethansulfonsaurer, endäquilibrierter, Acetoxygruppen-tragender Siloxane, wird beschrieben, bei dem man zyklische Siloxane, insbesondere umfassend D₄ und/oder D₅, und/oder zyklische-verzweigte Siloxane vom D/T-Typ unter Einsatz von Trifluormethansulfonsäure als Katalysator mit Acetanhydrid und unter Zusatz von Essigsäure umsetzt.

## Beschreibung

Die vorliegende Erfindung betrifft ein Verfahren zur Herstellung trifluormethansulfonsaurer, endäquilibrierter, Acetoxygruppen-tragender Siloxane,

Als reaktive Ausgangsmaterialien zur Herstellung von SiOC-basierten Silikonderivaten, insbesondere von SiOC-basierten Polyethersiloxanen stellen Acetoxygruppen-tragende Siloxane linearen beziehungsweise verzweigten Strukturtyps bedeutsame Verbindungsklassen dar.

Die bisher unveröffentlichen europäischen Patentanmeldungen mit den Anmeldeaktenzeichen EP18172882.5, EP18172876.7, EP17195510.7 und EP17204277.2 widmen sich der Herstellung SiOC-verknüpfter Polyethersiloxane, wobei als reaktive Zwischenstufen trifluormethansulfonsaure, äquilibrierte Acetoxysiloxane des linearen beziehungsweise auch des verzweigten Strukturtyps verwendet werden.

Die in diesen Schriften aufgeführten Herstellweisen der dort verwendeten Acetoxysiloxane näher untersuchend, haben die Erfinder gefunden, dass die trifluormethansulfonsauren Acetoxysiloxane unmittelbar nach ihrer Herstellung noch größere Anteile an Siloxancyclen aufweisen (siehe hierzu Beispiele 3 und 6 der vorliegenden Erfindung), die sich allerdings bei Lagerung der Siloxane bei 23°C im Verlauf von ca. 2 bis 3 Wochen so in die jeweilige Siloxanmatrix einbauen, dass der Gehalt verbleibender Siloxancyclen (D₄ + D₅ + D₆) dem sich bei dieser Temperatur und einem Druck von 1013,25 hPa einstellenden Endgleichgewicht entspricht.

Die dabei resultierenden trifluormethansulfonsauren, äquilibrierten Acetoxysiloxane genügen demnach allen Qualitätserfordernissen, die man an diese reaktiven Zwischenprodukte stellen kann. Allerdings bleibt es wünschenswert, eine verbesserte Kinetik der Gleichgewichtseinstellung zu erzielen, um eine unmittelbare Weiterverarbeitung der Zwischenstufen zu gewährleisten.

Die Aufgabe vorliegender Erfindung liegt vor diesem Hintergrund darin, ein Verfahren zur Herstellung endäquilibrierter Acetoxyfunktionen aufweisender Siloxane zu finden, das die Kinetik der Gleichgewichtseinstellung so vorteilhaft beschleunigt, dass man bereits zum Ende des Herstellprozesses unmittelbar weiterverarbeitbare Reaktivsiloxane isoliert.

Überraschenderweise wurde nun im Rahmen der vorliegenden Erfindung gefunden, dass man zu endäquilibrierten Acetoxysiloxanen linearen als auch verzweigten Strukturtyps gelangt, indem man die in den bisher unveröffentlichen europäischen Patentanmeldungen mit den Anmeldeaktenzeichen EP18172882.5, EP18172876.7, EP17195510.7 und EP17204277.2 beschriebenen Umsetzungen unter Hinzufügen von Essigsäure ausführt.

Gegenstand der vorliegenden Erfindung ist ein Verfahren zur Herstellung trifluormethansulfonsaurer, endäquilibrierter, Acetoxygruppen-tragender Siloxane, bei welchem man zyklische Siloxane, insbesondere umfassend D₄ und/ oder D₅, und/ oder Mischungen zyklisch-verzweigter Siloxane vom D/T-Typ unter Einsatz von Trifluormethansulfonsäure als Katalysator mit Acetanhydrid und unter Zusatz von Essigsäure umsetzt.

Hinsichtlich der Verwendbarkeit von DT-Zyklen haben die Erfinder festgestellt, dass sich sowohl Mischungen zyklischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (D₅) und/oder deren Mischungen enthalten,
als auch
Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,
besonders gut für den erfindungsgemäßen Einsatz eignen.

Die erfindungsgemäß einsetzbaren zyklisch-verzweigten Siloxane vom D/T-Typ sind sowohl im experimentellen Teil beispielhaft beschrieben als auch in der europäischen Patentanmeldung EP3321304A1 als auch in der noch nicht offengelegten Patentanmeldung EP 17169876.4 detailliert beschrieben. Beide Schriften gehören somit vollumfänglich zum Offenbarungsgehalt dieser Erfindung.

Um zu den Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, zu gelangen, eignet sich ein Verfahren umfassend die Schritte
(a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach
(b) eine durch Wasserzugabe eingeleitete Hydrolyse- und Kondensationsreaktion sowie Zugabe eines Silicium-haltigen Lösemittels, gefolgt von,
(c) einer destillativen Abtrennung des freigesetzten Alkohols, im System vorhandenen Wassers und Silicum-haltigen Lösemittels sowie einer Neutralisation oder Abtrennung des sauren Katalysators und ggf. Abtrennung womöglich gebildeter Salze,
wobei das Silicium-haltige Lösungsmittel vorzugsweise die isomeren Siloxancyclen Oktamethylcyclotetrasiloxan (D₄), Dekamethylcyclotetrasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird,
wie in der in der noch nicht offengelegten Patentanmeldung EP 17169876.4 beschrieben.

Für die Zwecke der Ausführbarkeit sei hier beispielhaft die Herstellung dieser vorgenannten Mischungen zyklischer-verzweigter, ausschließlich D- und T-Einheiten aufweisender Siloxan gezeigt: In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 gTrifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser sowie 200 ml Dekamethyl-cyclopentasiloxan (D5) hinzu und tauscht den Rückflusskühler gegen eine Destillationsbrücke aus und destilliert innerhalb der folgenden Stunde die bis 90°C flüchtigen Bestandteile ab. Man belässt den Reaktionsansatz für weitere 2 Stunden bei 90°C, lässt dann auf 50°C abkühlen und fügt 5 ml einer 25%igen, wässrigen Ammoniaklösung hinzu und rührt zur vollständigen Neutralisation noch eine weitere Stunde nach. Bei 100°C und einem angelegten Hilfsvakuum von < 1mbar werden Wasser und das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMRSpektrum ein D-/T-Verhältnis von 6,1 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 4,1 Molprozent zu.

Um zu den Mischungen zyklischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (D₅) und/oder deren Mischungen enthalten, zu gelangen, eignet sich ein Verfahren, in welchem ein Trialkoxysilan in einem Lösemittel mit Siloxancyclen und/oder α,ω-Dihydroxy-polydimethylsiloxan unter Zugabe von Wasser und in Anwesenheit von mindestens einem sauren Katalysator umgesetzt wird, wie in der europäischen Patentanmeldung EP3321304A1 beschrieben. Das Beispiel 1 der vorliegenden Erfindung zeigt beispielhaft die Darstellung entsprechender Mischungen zyklischer-verzweigter Siloxane vom D/T-Typ.

Gemäß einer bevorzugten Ausführungsform der Erfindung setzt man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix bestehend aus Acetanhydrid und zyklischen Siloxanen, umfassend D₄ und/oder D₅, beziehungsweise bestehend aus Acetanhydrid, und Mischungen zyklisch-verzweigter Siloxanen vom D/T-Typ, beziehungsweise bestehend aus zyklischen Siloxanen, umfassend D₄ und/oder D₅, und Mischungen zyklisch-verzweigter Siloxanen vom D/T-Typ, hinzu.

Der Katalysator Trifluormethansulfonsäure wird gemäß einer bevorzugten Ausführungsform der Erfindung in Mengen von 0,1 bis 1,0 Massenprozent, bevorzugt 0,1 bis 0,3 Massenprozent, bezogen auf die aus Acetanhydrid und zyklischen Siloxanen, insbesondere umfassend D₄ und/oder D₅, und/oder zyklischen-verzweigten Siloxanen vom D/T-Typ bestehende Reaktionsmatrix, eingesetzt.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen beziehungsweise nach der Derivatisierung der verzweigten Acetoxysiloxane zu den entsprechenden verzweigten Isopropoxysiloxanen herangezogen werden. Der erfindungsgemäße Einsatz der Essigsäure ermöglicht hier die problemlose Unterschreitung sonst üblicher Gleichgewichtsanteile von etwa 13 Gewichtsprozent des Gesamtcyclengehaltes bei den linearen α,ω-Diacetoxypolydimethylsiloxanen und von etwa 8 Gewichtsprozent des Gesamtcyclengehaltes bei den verzweigten Acetoxysiloxanen. Demzufolge entspricht es einer bevorzugten Ausführungsform wenn Gleichgewichtsanteile des Gesamtcyclengehaltes von kleiner 13, vorzugsweise kleiner 12 Gewichtsprozent bei den linearen α,ω-Diacetoxypolydimethylsiloxanen, und Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den α,ω-Diisopropoxypolydimethylsiloxanen beziehungsweise zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane beziehungsweise der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Gemäß einer bevorzugten Ausführungsform führt man die Umsetzung im Temperaturbereich von 140 bis 160°C und in einem Zeitraum von 4 bis 8 Stunden durch.

Ein weiterer Gegenstand der vorliegenden Erfindung betrifft trifluormethansulfonsaure, endäquilibrierte lineare α,ω-Acetoxygruppen-tragende Siloxane, welche Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen, vorzugsweise hergestellt nach einem erfindungsgemäßen Verfahren wie zuvor beschrieben.

Ein weiterer Gegenstand der vorliegenden Erfindung betrifft trifluormethansulfonsaure, endäquilibrierte verzweigte Acetoxygruppen-tragende Siloxane, welche Gesamtcyclengehalte, definiert als Summe der Gehaltsanteile der zyklischen Siloxane umfassend D₄ , D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen, vorzugsweise hergestellt nach einem erfindungsgemäßen Verfahren wie zuvor beschrieben.

Ein weiterer Gegenstand der vorliegenden Erfindung betrifft die Verwendung der endäquilibrierten trifluormethansulfonsauren Acetoxygruppen-tragenden Siloxane, wie zuvor beschrieben, als Ausgangsmaterialien für die Herstellung von SiOC-verknüpften Polyethersiloxanen für deren Einsatz in PU-Schaumstabilisatoren, in Entschäumern, in Dismulgatoren, in Emulgatoren und in Lack- und Verlaufsadditiven.

### Beispiele

Die folgenden Beispiele dienen dem Fachmann allein zur Erläuterung dieser Erfindung und stellen keinerlei Beschränkung des beanspruchten Gegenstandes dar. Die Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die GPC's (Gel-Permeations-Chromatographie) werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die Gaschromatogramme werden an einem GC-Gerät des Typs GC 7890B der Fa. Agilent Technologies
ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen: Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtcylengehalt definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen herangezogen. Die Derivatisierung zu den α,ω-Diisopropoxypolydimethylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxy-polydimethylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

### Beispiel 1

Herstellung eines zyklisch-verzweigten Siloxans mit einem angestrebten D-/ T-Verhältnis von 6 : 1 In einem 10-I-Vierhalsrundkolben mit KPG-Rührer und aufgesetztem Rückflusskühler werden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab. Man lässt den Reaktionsansatz auf etwa 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren ²⁹Si-NMR-Spektrum ein D-/T-Verhältnis von 6,2 : 1 (angestrebt 6,0 : 1) zuweist. Bezogen auf die Summe der spektroskopisch erfassten Si-Einheiten kommt den D- und T-Einheiten, die Si-Alkoxybeziehungsweise SiOH-Gruppen tragen, ein Anteil von 0,52 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch Mw = 55258 g/ mol; Mn 1693 g/ mol und Mw/ Mn = 32,63.

### Beispiel 2 (erfindungsgemäß)

### Herstellung eines Acetoxy-terminierten, verzweigten Siloxans mit 1,5% Essigsäure-Zusatz

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach ²⁹Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) und 7,6 g Essigsäure (1,5% bezogen auf die Masse der Reaktanden) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 88,2 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2,3 % | 1,4 % | 0,4 % | 4,1 % | 7,1 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 3 (nichterfindungsgemäß)

### Herstellung eines Acetoxy-terminierten, verzweigten Siloxans

In einem 1000-ml-Vierhalskolben mit KPG-Rührer, Innenthermometer und aufgesetztem Rückflusskühler werden 49,9 g (0,489 mol) Essigsäureanhydrid zusammen mit 268,1 g der in Beispiel 1 hergestellten DT-Zyklen (D/ T-Verhältnis nach ²⁹Si-NMR-Spektrum = 6,18 : 1, M = 525,42 g/ mol und einem Anteil von SiOH/ SiOEt-Gruppierungen von 0,52 Mol-%) und 188,5 g Dekamethylcyclopentasiloxan (D₅) unter Rühren vorgelegt und mit 1,03 g (0,56 ml) Trifluormethansulfonsäure (0,2 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 92,3 % bezogen auf eingesetztes Essigsäureanhydrid sowie das vollständige Verschwinden spektroskopisch erfassbarer Anteile an Si-Alkoxy- und SiOH- Gruppen belegt.

### Überführung des verzweigten Acetoxylsiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 2.03 % | 21,85 % | 0,83 % | 24,71 % | 11,7 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 4 (erfindungsgemäß)

### Herstellung eines Acetoxy-terminierten, linearen Polydimethylsiloxans mit 1,5% Essigsäure-Zusatz

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 12,2 g Essigsäure (1,5 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. **93%** bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des α,ω-Diacetoxypolydimethylsiloxans in ein α,ω-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,94 % | 4,04 % | 1,07 % | 10,06 % | 11,00 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 5 (erfindungsgemäß)

### Herstellung eines Acetoxy-terminierten, linearen Polydimethylsiloxans mit 3,0% Essigsäure-Zusatz

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) und 24,3 g Essigsäure (3,0 Gew.-% bezogen auf die Gesamtmasse der Reaktanden) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 4 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. **93%** bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans in das entsprechende α,ω-Diisopropoxypolydimethylsiloxan zur analytischen Charakterisierung

Unmittelbar nach der Synthese werden 50,0 g dieses trifluormethansulfonsauren, äquilibrierten α,ω-Diacetoxypolydimethylsiloxans in einem 250-ml-Vierhalsrundkolben ausgerüstet mit mit KPG-Rührer, Innenthermometer und aufgesetztem Rückflusskühler zusammen mit 11,3 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des α,ω-Diacetoxypolydimethylsiloxans in ein a,co-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte (Angaben in Massenprozent) auf:

| D₄ | D₅ | D₆ | Summe (D₄ - D₆) | Isopropanolgehalt |
|---|---|---|---|---|
| 4,09 % | 2,62 % | 0,86 % | 7,57 % | 4,60 % |

Unter Berücksichtigung des Isopropanolüberschusses sind hierbei die Gehalte an Siloxancyclen (D₄, D₅ und D₆) allein bezogen auf den Siloxananteil berechnet.

### Beispiel 6 (nichterfindungsgemäß)

### Herstellung eines Acetoxy-terminierten, linearen Polydimethylsiloxans

In einem 1000-ml-Vierhalskolben mit KPG-Rührer, Innenthermometer und aufgesetztem Rückflusskühler werden 77,3 g (0,757 mol) Essigsäureanhydrid zusammen mit 732,8 g (1,98 mol) Dekamethylcyclopentasiloxan (D₅) unter Rühren vorgelegt und mit 1,62 g (0,88 ml) Trifluormethansulfonsäure (0,2 Massenprozent bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 90% bezogen auf eingesetztes Essigsäureanhydrid belegt entsprechend einem α,ω-Diacetoxypolydimethylsiloxan mit einer mittleren Gesamtkettenlänge von ca. 14.

### Überführung des α,ω-Diacetoxypolydimethylsiloxans das entsprechende α,ω-Diisopropoxypolydimethylsiloxan zur analytischen Charakterisierung

Unmittelbar nach der Synthese werden 50 g dieses trifluormethansulfonsauren, äquilibrierten α,ω-Diacetoxypolydimethylsiloxans werden in einem 250-ml-Vierhalsrundkolben ausgerüstet mit mit KPG-Rührer, Innenthermometer und aufgesetztem Rückflusskühler zusammen mit 11,3g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes ²⁹Si-NMR-Spektrum die quantitative Umwandlung des α,ω-Diacetoxypolydimethylsiloxans in ein a,co-Diisopropoxypolydimethylsiloxan belegt.

Ein Aliquot dieses α,ω-Diisopropoxypolydimethylsiloxans wird entnommen und gaschromatographisch analysiert. Das Gaschromatogramm weist folgende Gehalte auf:

| D₄ | D₅ | D₆ | Summe (D₄ - D₆) | Isopropanolgehalt |
|---|---|---|---|---|
| 1,72 % | 39,12 % | 0,88 | 41,72 | 9,50 |

Unter Berücksichtigung des Isopropanolüberschusses sind hierbei die Gehalte an Siloxancyclen (D₄, D₅ und D₆) allein bezogen auf den Siloxananteil berechnet.

## Patentansprüche

1. Verfahren zur Herstellung trifluormethansulfonsaurer, endäquilibrierter, Acetoxygruppen-tragender Siloxane, **dadurch gekennzeichnet,**
**dass** man zyklische Siloxane, insbesondere umfassend D₄ und/oder D₅,
und/oder Mischungen zyklisch-verzweigter Siloxane vom D/T-Typ unter Einsatz von Trifluormethansulfonsäure als Katalysator mit Acetanhydrid und unter Zusatz von Essigsäure umsetzt.

2. Verfahren nach Anspruch 1, **dadurch gekennzeichnet, dass** man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix
bestehend aus Acetanhydrid und zyklischen Siloxanen, umfassend D₄ und/oder D₅, beziehungsweise bestehend aus Acetanhydrid, und Mischungen zyklisch-verzweigter Siloxanen vom D/T-Typ,
beziehungsweise bestehend aus zyklischen Siloxanen, umfassend D₄ und/oder D₅, und Mischungen zyklisch-verzweigter Siloxanen vom D/T-Typ
hinzufügt.

3. Verfahren nach Anspruch 1 oder 2, **dadurch gekennzeichnet dass** Mischungen zyklischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Oktamethylcyclotetrasiloxan (D₄), Dekamethylcyclopentasiloxan (D₅) und/oder deren Mischungen enthalten, eingesetzt werden.

4. Verfahren nach Anspruch 1 oder 2, **dadurch gekennzeichnet, dass** Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, eingesetzt werden.

5. Verfahren nach einem der Ansprüche 1 bis 4, **dadurch gekennzeichnet, dass** man Trifluormethansulfonsäure in Mengen von 0,1 bis 1,0 Massenprozent, bevorzugt 0,1 bis 0,3 Massenprozent, bezogen auf die aus Acetanhydrid und zyklischen Siloxanen, insbesondere umfassend D₄ und/oder D₅,
und/oder Mischungen zyklisch-verzweigter Siloxane vom D/T-Typ bestehende Reaktionsmatrix, einsetzt.

6. Verfahren nach Anspruch 1 bis 5, **dadurch gekennzeichnet, dass** man die Umsetzung im Temperaturbereich von 140 bis 160°C und in einem Zeitraum von 4 bis 8 Stunden durchführt.

7. Trifluormethansulfonsaure, endäquilibrierte lineare α,ω-Acetoxygruppen-tragende Siloxane vorzugsweise hergestellt nach einem Verfahren nach Anspruch 1, 2 und 5 und 6, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 13, vorzugsweise kleiner 12 Gewichtsprozent aufweisen.

8. Trifluormethansulfonsaure, endäquilibrierte verzweigte Acetoxygruppen-tragende Siloxane vorzugsweise hergestellt nach einem Verfahren nach Anspruch 1 bis 6, **dadurch gekennzeichnet, dass** sie Gesamtcyclengehalte, definiert als Summe der Gehaltsanteile der zyklischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 8, vorzugsweise kleiner 7 Gewichtsprozent aufweisen.

9. Verwendung der endäquilibrierten trifluormethansufonsauren Acetoxygruppen-tragenden Siloxane nach Anspruch 7 oder Anspruch 8 als Ausgangsmaterialien für die Herstellung von SiOC-verknüpften Polyethersiloxanen für deren Einsatz in PU-Schaumstabilisatoren, in Entschäumern, in Dismulgatoren, in Emulgatoren und in Lack- und Verlaufsadditiven.
